**Europäisches Patentamt**

**European Patent Office**

**Office européen des brevets**

(11) Veröffentlichungsnummer: **0 472 918 B1**

(12) # EUROPÄISCHE PATENTSCHRIFT

(45) Veröffentlichungstag der Patentschrift: **11.01.95**

(51) Int. Cl.6: **B01J 23/74**, B01J 35/10,
B01J 37/03

(21) Anmeldenummer: **91112561.5**

(22) Anmeldetag: **26.07.91**

Die Akte enthält technische Angaben, die nach
dem Eingang der Anmeldung eingereicht wurden
und die nicht in dieser Patentschrift enthalten sind.

(54) **Trägerkatalysatoren und ein Verfahren zu ihrer Herstellung.**

(30) Priorität: **11.08.90 DE 4025525**

(43) Veröffentlichungstag der Anmeldung:
**04.03.92 Patentblatt 92/10**

(45) Bekanntmachung des Hinweises auf die
Patenterteilung:
**11.01.95 Patentblatt 95/02**

(84) Benannte Vertragsstaaten:
**AT BE CH DE DK ES FR GB IT LI LU NL SE**

(56) Entgegenhaltungen:
**EP-A- 0 031 472    EP-A- 0 322 049
EP-A- 0 340 848    EP-A- 0 398 668
US-A- 4 307 248    US-A- 4 318 829**

(73) Patentinhaber: **HOECHST AKTIENGESELL-
SCHAFT**

**D-65926 Frankfurt (DE)**

(72) Erfinder: **Horn, Gerhardt, Dr. Dipl.-Chem.
Bunsenstrasse 19
W-4200 Oberhausen 11 (DE)**
Erfinder: **Frohning, Carl-Dieter, Dr.
Dipl.-Chem.
Regnitstrasse 50
W-4230 Wesel (DE)**

Anmerkung: Innerhalb von neun Monaten nach der Bekanntmachung des Hinweises auf die Erteilung des
europäischen Patents kann jedermann beim Europäischen Patentamt gegen das erteilte europäische Patent
Einspruch einlegen. Der Einspruch ist schriftlich einzureichen und zu begründen. Er gilt erst als eingelegt, wenn
die Einspruchsgebühr entrichtet worden ist (Art. 99(1) Europäisches Patentübereinkommen).

**Beschreibung**

Die vorliegende Erfindung betrifft Nickel, Magnesiumoxid und gegebenenfalls weitere Zusatzstoffe enthaltende Trägerkatalysatoren mit einer engen Verteilung der Porenradien, und ein Verfahren zu ihrer Herstellung, ausgehend von Nickel- und Magnesiumsalze enthaltenden, wäßrigen Lösungen, aus denen mittels eines basischen Fällungsmittels ein Copräzipitat ausgefällt wird.

Die EP 0 322 049 A1 beschreibt einen Nickel-Siliciumdioxid-Katalysator, der gegebenenfalls ein Kation eines Metalls X aus der Gruppe II des Periodensystems der Elemente, insbesondere X = Mg, enthalten kann. Der Katalysator ist in reduziertem Zustand durch ein molares Verhältnis $SiO_2$ : Ni = (0,15 bis 0,35) : 1, ein molares Verhältnis X : Ni = (0 bis 0,15) : 1, eine aktive Nickeloberfläche oberhalb 120 $m^2/g$, eine BET-Oberfläche mit mindestens 40 % Poren eines Porenradius oberhalb 2,5 nm (25 Å) und einen Nickelgehalt von wenigstens 50 % gekennzeichnet. Für die Aktivität und Selektivität des Katalysators soll insbesondere der Prozentsatz der Oberfläche von Poren mit einem Porenradius $r_p$ oberhalb 2,5 nm (25 Å) von Bedeutung sein. Dieser Prozentsatz soll wenigstens 40 % betragen, vorzugsweise 45 % übersteigen.

Die Katalysatoren werden hergestellt, indem man in einer ersten Stufe eine Nickel- und Magnesiumsalze enthaltende Lösung kontinuierlich mit einem basischen Fällungsmittel im Überschuß versetzt und anschließend das derart erhaltene Copräzipitat kontinuierlich in einer zweiten Stufe mit wäßriger Silikatlösung versetzt, das anfallende Präzipitat beispielsweise durch Filtration sammelt, es anschließend trocknet und reduziert.

Die jeweils einzuhaltende Verweilzeit ist kurz. Sie beträgt in der ersten Stufe 20 bis 120 Sekunden und in der zweiten Stufe 40 bis 300 Sekunden.

Gegenstand der EP-A-0 340 848 ist ein Verfahren zur Hydrierung höherer Nitrile zu Aminen. Die Umsetzung erfolgt in Gegenwart von Nickelkatalysatoren, die etwa 30 Gew.-% Nickel auf einem $SiO_2$/MgO-Träger enthalten. Der Feinaufbau des Katalysators wird durch den durchschnittlichen Porenradius (1,5 bis 4,0 nm, vorzugsweise 1,5 bis 3,5 nm), durch das Porenvolumen (0,20 bis 0,80 ml/g) und die aktive Nickeloberfläche (90 bis 150 $m^2/g$) beschrieben.

Die EP-A-0 398 668 betrifft Nickel/$SiO_2$-Katalysatoren, die Ionen niedrigerer Metalle der 2. Gruppe des Periodensystems der Elemente (X) enthalten können. Merkmale der Katalysatoren sind ihr $SiO_2$/Ni-Molverhältnis, das 0,15 bis 0,40 und ihr X/Ni-Molverhältnis, das 0 bis 0,15 beträgt. Ferner besitzen die Katalysatoren eine aktive Oberfläche von mehr als 120 $m^2/g$ Ni und ihre BET-Oberfläche wird von Poren gebildet, deren Radius kleiner als 1,5 nm ist.

Die vorliegende Erfindung betrifft einen neuen, sich durch eine enge Verteilung der Porenradien auszeichnenden Katalysator, der in reduzierter Form $Mg^{2+}$ und Ni in einem Molverhältnis von (0,0075 bis 0,075) : 1, und 30,0 bis 40,0 Gramm eines in Wasser unlöslichen Trägers je Mol Ni enthält, wobei die aktive Nickelmetalloberfläche 110 bis 180 $m^2/g$ Ni beträgt und 65 bis 97 % der BET-Gesamtoberfläche von Poren mit Radien $r_p \leqq$ 2,5, und 60 bis 95 %, insbesondere 70 bis 95 % der BET-Gesamtoberfläche von Poren Radien $r_p$ von 1,5 bis 2,5 nm gebildet werden.

Ein wesentliches Merkmal des erfindungsgemäßen Katalysators ist die enge Verteilung der Porenradien, ausgedrückt durch einen hohen Anteil der BET-Gesamtoberfläche, der auf Poren eines Radius $r_p$ von 1,5 bis 2,5 nm zurückgeht. Unter BET-Gesamtoberfläche wird die durch Adsorption von Stickstoff nach der Brunauer, Emmett und Teller-Methode (BET) ermittelte Oberfläche verstanden.

Die BET-Gesamtoberfläche beträgt 160 bis 450, insbesondere 180 bis 380, bevorzugt 200 bis 350 $m^2/g$ Katalysator. Das Verfahren zur Bestimmung der BET-Gesamtoberfläche nach Brunauer, Emmett und Teller ist in J. Amer. Chem. Soc. <u>60</u>, (1938) 309 beschrieben.

Durch die vorstehend genannte enge Verteilung der Porenradien mit Schwerpunkt im Bereich $r_p$ von 1,5 bis 2,5 nm erhält der erfindungsgemäße Katalysator besondere Eigenschaften, die eine Erhöhung der Aktivität und eine Verbesserung der Selektivität in einer Reihe von Umsetzungen zur Folge haben.

Ein weiteres Merkmal des neuen Katalysators ist seine Zusammensetzung, ausgedrückt durch das Molverhältnis Mg zu Ni. Der Vollständigkeit halber sei auf die nachfolgende Begriffsbestimmung aufmerksam gemacht. 1 Mol Mg bzw. 1 Mol $Mg^{2+}$ entspricht 24,305 g Mg bzw. 24,305 g $Mg^{2+}$ und 1 Mol Ni bzw. 1 Mol $Ni^{2+}$ entspricht 58,71 g Ni bzw. 58,71 g $Ni^{2+}$. In reduziertem Zustand des Katalysators liegt Magnesium als $Mg^{2+}$ und Nickel überwiegend oder fast vollständig in metallischer Form vor. Unter Molverhältnis ist somit, genauer formuliert, das Verhältnis Mol $Mg^{2+}$ : (Mol Ni + Mol nichtreduziertes $Ni^{2+}$) zu verstehen.

Die Zusammensetzung des neuen Katalysators ist ferner bestimmt durch das Verhältnis der Gewichtsteile des in Wasser unlöslichen Trägers zu Ni, wobei hierunter wiederum die Summe aus Mol metallischem Nickel und Mol $Ni^{2+}$ gemeint ist.

Der erfindungsgemäße Katalysator enthält in reduzierter Form, wie bereits zuvor erwähnt, $Mg^{2+}$ und Ni in einem Molverhältnis von (0,0075 bis 0,075) : 1. Besonders bewährt hat es sich, ein Molverhältnis $Mg^{2+}$ : Ni von (0,015 bis 0,060) : 1, insbesondere (0,022 bis 0,055) : 1 zu wählen.

Als Träger eignen sich verschiedene, in Wasser unlösliche Materialien. Hierunter fallen Silikate wie Ca-, Mg- und/oder Al-silikate, $Al_2O_3$, $SiO_2$ und/oder Kieselgur. Als besonders brauchbare Träger sind Mg-silikate, insbesondere in Form von Bimsstein, $Al_2O_3$, $SiO_2$ und/oder Kieselgur, insbesondere Bimsstein, $Al_2O_3$, $SiO_2$ und/oder Kieselgur, bevorzugt $SiO_2$ und/oder Kieselgur hervorzuheben.

Der Träger kann aus zwei oder mehreren der vorstehend genannten Materialien bestehen. In den meisten Fällen erweist es sich als günstig, lediglich eines der zur Auswahl stehenden Materialien als Träger zu verwenden.

Das Trägermaterial soll üblicherweise in feinteiliger Form vorliegen. Seine Teilchen sollten eine möglichst enge Kornverteilung aufweisen. Da durch die Partikelgröße auch Eigenschaften des Katalysators nach Fertigstellung, beispielsweise Filtrierbarkeit, Schüttgewicht, Verformbarkeit und Katalysatoroberfläche beeinflußt werden, kommt der Wahl der Partikelgröße eine gewisse Bedeutung zu.

Die Trägerpartikel sollen eine Korngröße von 1 bis 30, insbesondere 2 bis 25, bevorzugt 3 bis 20 μm aufweisen. Ihre Korngröße ist auf die gewünschten Eigenschaften des fertigen, in reduzierter Form vorliegenden Katalysators abzustimmen.

Der Katalysator enthält 30 bis 40 Gramm Träger je Mol Ni. Unter Mol Ni ist - wie bereits zuvor erwähnt - die Summe aus Nickel in reduzierter und nichtreduzierter Form zu verstehen.

Die aktive Nickelmetalloberfläche des Katalysators beträgt 110 bis 180, insbesondere 120 bis 160, bevorzugt 130 bis 150 m²/g Ni. Ihre Bestimmung erfolgt in Anlehnung an eine in Journal of Catalysis 81, (1983) 204 und 96, (1985) 517 näher beschriebene Methode durch Messung der durch Chemiesorption bei 20°C aufgenommenen Menge Wasserstoff.

Der erfindungsgemäße Katalysator zeichnet sich ferner dadurch aus, daß 60 bis 95, insbesondere 70 bis 95, bevorzugt 73 bis 90 % der BET-Gesamtoberfläche von Poren mit einem Radius $r_p$ von 1,5 bis 2,5 nm gebildet werden. Die Bestimmung der Porenradien erfolgt nach einer in S.J. Gregg and K.S.W. Sing, Adsorption Surface Area and Porosity (Academic Press New York-London 1967) Seiten 160 bis 182 näher beschriebenen Methode.

Poren mit einem Radius $r_p$ von 1,8 bis 2,5 nm (18 bis 25 Å) bilden 35 bis 85, insbesondere 45 bis 76, bevorzugt 50 bis 70 % der BET-Gesamtoberfläche.

Die Verteilung der Porenradien, ausgedrückt durch den Prozentsatz der BET-Gesamtoberfläche, die von Poren eines Radius $r_p$ von 1,5 bis 2,5 nm gebildet wird, steht im Zusammenhang mit der Größe der BET-Gesamtoberfläche. Je größer die BET-Gesamtoberfläche ausfällt, desto höher ist im allgemeinen der von Poren eines Radius $r_p$ von 1,5 bis 2,5 nm gebildete Prozentsatz der BET-Gesamtoberfläche. Besonders charakteristisch ist für den erfindungsgemäßen Katalysator, daß der überwiegende Anteil (≧ 60 %) der BET-Gesamtoberfläche von Poren mit Radien $r_p$ von 1,5 bis 2,5 nm resultiert.

Die vorliegende Erfindung betrifft auch ein Verfahren zur Herstellung von Trägerkatalysatoren gemäß Anspruch 15.

Das Verfahren zur Herstellung der erfindungsgemäßen Katalysatoren geht von einer Nickel- und Magnesiumsalze enthaltenden, wäßrigen Lösung aus. Diese Mischsalzlösung enthält 10 bis 100, insbesondere 20 bis 80, bevorzugt 30 bis 50 g Ni/l. Sie weist Magnesium entsprechend 0,2 bis 15, insbesondere 0,5 bis 12, bevorzugt 1 bis 10 g MgO/l auf.

Die Mischsalzlösung stellt man her, indem man wasserlösliche, anorganische, organische oder komplexe Salze von Nickel und Magnesium in Wasser löst. Gut geeignete Salze sind die Sulfate, Chloride, Acetate, Propionate, Butyrate und Nitrate. Besonders bewährt hat es sich, Nickel und Magnesium in Form ihrer Sulfate, Chloride, Acetate und Nitrate, bevorzugt in Form ihrer Nitrate einzusetzen.

Um einer unerwünschten Hydrolyse vorzubeugen und die Fällung günstig zu beeinflussen, empfiehlt es sich, in der Mischsalzlösung einen Überschuß freier Säure zuzulassen. Die Mischsalzlösung soll freie Säure entsprechend einem Verhältnis $H^+ : Mg^{2+}$ = (0,01 bis 0,2) : 1, insbesondere (0,02 bis 0,1) : 1, bevorzugt (0,03 bis 0,06) : 1 enthalten. Die freie Säure wird durch Titration mit NaOH ermittelt, bis man zu einem pH-Wert von 0,8 gelangt. Als freie Säure können Mineralsäuren wie Salzsäure, Schwefelsäure und Salpetersäure eingesetzt werden. Besonders geeignet ist Salpetersäure.

Die Mischsalzlösung wird getrennt, aber gleichzeitig mit einer wäßrigen Lösung eines basischen Fällungsmittels einem in Wasser suspendierten Träger zugeführt.

Als Fällungsmittel dient eine wäßrige Lösung einer basischen Verbindung, insbesondere eine wäßrige Alkalicarbonat-, Alkalihydrogencarbonat-, Alkalihydroxid-, Ammoniumhydroxid- oder Ammoniumcarbonatlösung. Es können auch Mischungen derselben Anwendung finden. Besonders geeignet ist eine $Na_2CO_3$ und/oder $NaHCO_3$ enthaltende wäßrige Lösung. Das Fällungsmittel soll einen pH-Wert von 7,5 bis 13, insbesondere 8 bis 12, bevorzugt 9 bis 11 aufweisen.

Die wäßrige Lösung enthält 0,1 bis 4,0, insbesondere 0,6 bis 3,0, bevorzugt 1,6 bis 2,4 Äquivalente basische Verbindung/l Lösung. Recht gute Ergebnisse werden mit wäßrigen Lösungen, die 0,3 bis 1,5, insbesondere 0,8 bis 1,2 Mol Alkalicarbonat/l Lösung enthalten, erzielt.

Um eine möglichst vollständige Fällung sicherzustellen und zugleich ein besonders homogenes, aus basischen Nickel- und Magnesiumverbindungen bestehendes Copräzipitat zu erhalten, setzt man die basische Verbindung in geringem Überschuß ein. Im allgemeinen beträgt der stöchiometrische Überschuß 0,5 bis 10, insbesondere 1 bis 7 % basische Verbindung. Besonders bewährt hat sich die Verwendung von 2 bis 5 % überschüssige basische Verbindung. Der Überschuß bezieht sich jeweils auf die zur vollständigen Fällung von Ni und Mg erforderliche Menge basische Verbindung.

Der stöchiometrische Überschuß ist derart zu bemessen, daß einerseits zwar die Fällung eines möglichst homogenen Ni-Mg-Copräzipitats gewährleistet ist, andererseits aber auch eine Fällung der in der Mischsalzlösung enthaltenen Metallionen im jeweils gewünschten Umfange eintritt.

Die Fällung wird herbeigeführt, indem man die Mischsalzlösung und das Fällungsmittel getrennt, aber gleichzeitig, kontinuierlich oder diskontinuierlich einem in Wasser suspendierten, für die Herstellung des Katalysators geeigneten Trägermaterial unter Vermischung zuführt.

Als Trägermaterial lassen sich die bereits erwähnten Stoffe, nämlich Silikate des Calciums, des Magnesiums und/oder Aluminiums, $Al_2O_3$, $SiO_2$ und/oder Kieselgur verwenden.

Die Trägermaterial-Wasser-Suspension sollte 6 bis 100, insbesondere 10 bis 60, bevorzugt 20 bis 40 Gramm Trägermaterial/Liter Wasser enthalten. Zu niedrige Trägermaterialgehalte sollten aus Gründen der Wirtschaftlichkeit, zu hohe Trägermaterialgehalte aus Gründen der Rührfähigkeit der resultierenden Suspension vermieden werden.

Die Fällung des aus basischen Nickel- und Magnesiumverbindungen bestehenden Copräzipitats wird durch vergleichsweise langsame Zugabe der Mischsalzlösung und des Fällungsmittels herbeigeführt. Die Fällungszeit sollte wenigstens 10, insbesondere wenigstens 15, bevorzugt wenigstens 20 Minuten betragen.

In den meisten Fällen hat es sich bewährt, eine Fällungszeit von 15 bis 120, insbesondere 20 bis 90, bevorzugt 25 bis 60 Minuten einzuhalten. Die Fällungszeit läßt sich durch Wahl einer entsprechenden Zugabegeschwindigkeit von Mischsalzlösung und Fällungsmittel, insbesondere bei diskontinuierlich durchgeführter Fällung, einstellen, während bei kontinuierlicher Arbeitsweise neben den Zugabegeschwindigkeiten von Mischsalzlösung und Fällungsmittel auch noch der auf das Reaktionsvolumen bezogene Durchsatz zu berücksichtigen ist.

Man arbeitet während der Fällung bei einem konstanten pH-Wert innerhalb eines pH-Bereiches von 6 bis 8,5, insbesondere 6,5 bis 7,8. Schwankungen des pH-Wertes sollten möglichst gering gehalten werden, um die Herstellung eines besonders homogenen Copräzipitats zu gewährleisten. Die Schwankungen des pH-Wertes sollten auf ein Intervall von -0,5 bis + 0,5, vorzugsweise -0,2 bis +0,2 begrenzt werden.

Die Fällung wird bei Temperaturen oberhalb 80°C, insbesondere in einem Bereich von 90 bis 110, bevorzugt 95 bis 105°C durchgeführt. Hierzu genügt es, die an der Fällung beteiligten Stoffe, nämlich die Mischsalzlösung, das Fällungsmittel und die Trägermaterial-Wasser-Suspension auf eine entsprechend hohe Temperatur einzustellen. Während der Fällung sollte die Temperatur möglichst konstant gehalten werden. Die Abweichungen von der vorgegebenen Temperatur sollten ± 2, insbesondere ± 1°C nicht übersteigen. Schwankungen der Fällungstemperatur beeinflussen die Beschaffenheit, beispielsweise Partikelgröße und Homogenität des Copräzipitats in nachteiliger Weise.

Das Copräzipitat enthält Magnesium und Nickel entsprechend einem Molverhältnis von (0,02 bis 0,25) : 1, insbesondere (0,03 bis 0,2) : 1, bevorzugt (0,035 bis 0,1) : 1. Es wird nach Beendigung der Fällung von der Mutterlauge abgetrennt. Dies kann durch Dekantieren und/oder Filtrieren erfolgen.

Anschließend wird das Copräzipitat mit Wasser gewaschen, wobei außer den in Lösung befindlichen Bestandteilen, z.B. $Na^+$ und $NO_3^-$, die im Copräzipitat enthaltenen, basischen Magnesiumverbindungen aus dem Copräzipitat herausgelöst werden. Dies hat zur Folge, daß sich das Molverhältnis Magnesium zu Nickel verändert und infolge der Abnahme von Magnesium zu niedrigeren Werten, die denen des erfindungsgemäßen Katalysators entsprechen, verschiebt. Man wäscht bei relativ hohen Temperaturen von 60 bis 90, insbesondere 65 bis 85, bevorzugt 70 bis 80°C. Es ist auch möglich bei tieferen Temperaturen zu waschen, man muß dann allerdings deutlich längere Waschzeiten und größere Waschwassermengen in Kauf nehmen.

Das Herauslösen der Magnesiumverbindungen aus dem Copräzipitat läßt sich durch die verwendete Menge Waschwasser, durch die Strömungsgeschwindigkeit und Temperatur des Waschwassers sowie durch die Dauer des Waschens beeinflussen. Steigende Mengen Waschwasser, hohe Temperaturen des Waschwassers und lange Dauer des Waschvorganges fördern ein besonders weitgehendes Herauslösen der Magnesiumverbindungen. Niedrigere Mengen Waschwasser, niedrige Temperaturen des Waschwassers und kurze Dauer des Waschvorganges führen zu einem verringertem Herauslösen der Magnesiumverbindungen. Die einzelnen Parameter des Waschprozesses, Menge, Strömungsgeschwindigkeit und Temperatur des Waschwassers sowie Dauer des Waschens, sind im Einzelfall derart aufeinander abzustimmen, daß der gewünschte Anteil Magnesiumverbindungen herausgelöst wird und Mg und Nickel entsprechend einem Molverhältnis von (0,0075 bis 0,075) : 1, insbesondere (0,015 bis 0,06) : 1, bevorzugt (0,022 bis 0,055) : 1 vorliegen.

Üblicherweise verwendet man 80 bis 350, insbesondere 100 bis 300, bevorzugt 120 bis 180 Liter Waschwasser je Mol herauszulösendes $Mg^{2+}$.

Die Dauer des Waschvorganges muß ausreichend bemessen werden. Sie sollte mindestens 60, insbesondere mindestens 80, bevorzugt mindestens 90 Minuten betragen. Üblicherweise genügt eine Waschdauer von 75 bis 180, insbesondere 90 bis 150, bevorzugt 100 bis 135 Minuten.

Man kann den Waschprozeß in einem einzigen Schritt durchführen oder ihn in mehreren, aufeinanderfolgenden Stufen ablaufen lassen, indem man die gesamt erforderliche Menge Waschwasser entsprechend verteilt. Welchem Vorgehen man den Vorzug gibt, hängt vom Einzelfall ab. Im allgemeinen führt sowohl ein einstufiger als auch ein mehrstufiger Waschvorgang zum gewünschten Erfolg. Ein mehrstufiger Waschprozeß kann erforderlich werden, falls ein Copräzipitat mit hohem Magnesiumgehalt auf ein Produkt mit niedrigem Magnesiumanteil eingestellt werden soll.

Eine Kontrolle des Waschvorganges wird durch Bestimmung der im Waschwasser vorhandenen, herausgelösten Magnesiumverbindungen erleichtert. Auf eine derartige Überwachung kann verzichtet werden, falls man den Waschvorgang unter standardisierten und kontrollierten Bedingungen, beispielsweise bei vorgegebener Menge Waschwasser, Temperatur und Dauer ausübt.

Falls gewünscht, kann man das gewaschene Material in stückige Form bringen. Zur Formgebung kann man sich bewährter Verfahren, beispielsweise der Strangextrusion bedienen.

Die Trocknung wird bei erhöhten Temperaturen, vorzugsweise bei steigenden Temperaturen stufenweise durchgeführt. Es erweist sich als ausreichend, die Trocknung bei Temperaturen von 50 bis 120, insbesondere 55 bis 100, bevorzugt 60 bis 90 °C unter Anwendung üblicher Verfahren, wie Anordnung des Trockengutes im Festbett oder im bewegten Bett, beispielsweise in Wirbelschicht, durchzuführen.

Die Reduktion der Katalysatorzusammensetzung erfolgt mittels Wasserstoff bei Temperaturen von 260 bis 400, insbesondere 280 bis 360 °C.

Das erfindungsgemäße Verfahren stellt die im vorangegangenen bereits näher beschriebene, charakteristische Porenradien- und Oberflächenverteilung des Katalysators sicher.

Durch Variation der Verfahrensparameter innerhalb der angegebenen Bereiche kann die Porenradien- und Oberflächenverteilung gezielt in der gewünschten Richtung verändert werden. So kann zum Beispiel wahlweise eine relativ enge Porenradienverteilung im Porenradienbereich von 1,8 nm bis 2,5 nm oder eine breitere Porenradienverteilung im Porenradienbereich von 1,5 nm bis 2,5 nm gezielt eingestellt werden.

Je weiter die Porenradienverteilung zu kleineren Porenradien verschoben wird, desto größer ist die BET-Gesamtoberfläche des erfindungsgemäßen Katalysators.

Der erfindungsgemäße Katalysator läßt sich vorteilhaft für Hydrierungen von olefinischen Kohlenwasserstoffen und/oder aromatischen Kohlenwasserstoffen in flüssiger Phase verwenden. Bereits bei mäßigen Temperaturen im Bereich von 80 bis 140 °C werden in den untersuchten Reaktionen hohe Umsätze und gute Selektivitäten erzielt. Hierbei tritt die Überlegenheit des neuen Katalysators gegenüber Katalysatoren des Standes der Technik sehr deutlich hervor. Außerdem weist der erfindungsgemäße Katalysator aufgrund seiner Korngrößenverteilung überragende Filtrationseigenschaften auf.

Die nachfolgenden Beispiele dienen zur Verdeutlichung der vorliegenden Erfindung, ohne sie zu begrenzen.

Beispiel 1

Herstellung eines Katalysators der Zusammensetzung 60 Gew.-% Ni, 1,6 Gew.-% Mg (gerechnet als MgO), 36 Gew.-% Kieselgur als Trägermaterial, entsprechend 35,2 g Kieselgur je Mol Ni.

Durch Auflösen von 1980 g $Ni(NO_3)_2 \cdot 6H_2O$ und 153 g $Mg(NO_3)_2 \cdot 6H_2O$ in destilliertem Wasser wird unter Zusatz von $HNO_3$ eine Mischsalzlösung, die 35 g Ni/Liter, Magnesium entsprechend 2,1 g MgO/Liter und 1,5 bis 2,5 g freie $HNO_3$/Liter enthält, hergestellt.

Als Fällungsmittel dient eine wäßrige Sodalösung, die durch Auflösen von $Na_2CO_3$ in destilliertem Wasser einen Wert von 106 g $Na_2CO_3$/Liter aufweist.

Zur Durchführung der Fällung werden 240 g Kieselgur in 8,0 l destilliertem Wasser suspendiert und auf 97 °C erwärmt. Zu der gerührten Suspension fügt man gleichzeitig, aber getrennt 11,4 l der auf 97 °C erhitzten Mischsalzlösung und 8,9 l des ebenfalls 97 °C aufweisenden Fällungsmittels zu. Durch die gleichzeitige, aber getrennte Zugabe von Mischsalzlösung und Fällungsmittel wird der pH-Wert der intensiv gerührten Suspension innerhalb von 1 bis 5 Minuten auf pH = 7,3 bis 7,4 eingestellt. Während der Fällung wird der pH-Wert auf 7,4 ± 0,2 und die Temperatur auf 97 ± 1°C konstant gehalten.

Die Zugabe von Mischsalzlösung und Fällungsmittel wird so eingestellt, daß sie nach etwa 30 bis 35 Minuten beendet ist. Unmittelbar danach wird filtriert.

Der Filtrationsrückstand wird anschließend mit 65 Liter 80°C heißem Wasser über einen Zeitraum von 105 Minuten gewaschen und erneut abfiltriert.

Der Filterkuchen wird extrudiert und bei steigender Temperatur (50 bis 75°C) mit Luft auf einen Restgehalt Wasser < 10 Gew.-% Wasser, bezogen auf getrocknete Masse, getrocknet.

Das getrocknete Material wird im $H_2$-Strom (400 l $H_2$ je Liter Katalysator und Stunde) bei 280 bis 360°C reduziert. Die Reduktion ist nach 4 Stunden beendet.

Der Katalysator enthält etwa 60 Gew.-% Ni, Magnesium entsprechend 1,6 Gew.-% MgO und 36 Gew.-% Kieselgur entsprechend 35,2 Gramm Kieselgur je Mol Ni. Etwa 82 % der BET-Gesamtoberfläche werden von Poren mit Porenradien $r_p \leq 2,5$ nm (25 Å) und ca. 60 % der BET-Gesamtoberfläche von Poren mit $r_p = 1,8$ bis $r_p = 2,5$ nm gebildet. Die aktive Nickelmetalloberfläche beträgt 140 bis 150 m$^2$/g Ni. Die BET-Gesamtoberfläche liegt bei 230 bis 270 m$^2$/g Katalysator.

Der anfallende Katalysator ist pyrophor. Daher empfiehlt es sich, ihn in an sich bekannter Weise mit einem $O_2/N_2$-Gemisch, das etwa 0,1 bis 1,0 Gew.-% $O_2$ enthält, zu behandeln. Dadurch wird er gegenüber dem Einfluß von Luft relativ unempfindlich. Der derart stabilisierte Katalysator läßt sich einfacher handhaben. Infolge der $O_2$-Behandlung verringert sich der Ni-Gehalt auf etwa 57 Gew.-%.

Beispiel 2

Hydrierung eines aus olefinischen und aromatischen Kohlenwasserstoffen bestehenden Gemisches mittels eines erfindungsgemäßen Katalysators.

400 g eines Kohlenwasserstoffgemisches, das etwa 2 Gew.-% olefinische Kohlenwasserstoffe und etwa 22 Gew.-% aromatische Kohlenwasserstoffe enthält, werden in einem Autoklaven (Volumen 1 Liter), der mit einem Magnethubrührer ausgestattet ist, vorgelegt und mit 3,53 g des nach Beispiel 1 hergestellten Katalysators, der 56,9 Gew.-% Ni enthält, versetzt (≙ 0,5 Gew.-% Ni, bezogen auf Kohlenwasserstoffgemisch). Anschließend wird unter Rühren auf 140°C aufgeheizt und unter einem Druck von 20 bar $H_2$ hydriert.

Nach 85 Minuten ist die Wasserstoffaufnahme beendet. Das anfallende Hydrierprodukt weist lediglich <0,01 Gew.-% olefinische Kohlenwasserstoffe und <0,02 Gew.-% aromatische Kohlenwasserstoffe auf.

Beispiel 3 (Vergleichsversuch)

Hydrierung eines aus olefinischen und aromatischen Kohlenwasserstoffen bestehenden Gemisches mittels eines herkömmlichen Katalysator.

400 g des in Beispiel 2 angegebenen Kohlenwasserstoffgemisches werden mit 3,64 g eines herkömmlichen Katalysators, der 55 Gew.-% Ni, 8 Gew.-% MgO und 33,1 Gew.-% Kieselgur, entsprechend 35,225 g Kieselgur je Mol Ni enthält und eine aktive Nickelmetalloberfläche von 60 bis 70 m$^2$/g Ni und eine BET-Gesamtoberfläche von 130 bis 150 m$^2$/g Katalysator besitzt, eingesetzt (≙ 0,5 Gew.-% Ni, bezogen auf Kohlenwasserstoffgemisch). Es wird, wie in Beispiel 2 angegeben, bei 140°C und 20 bar $H_2$ gearbeitet.

Die Wasserstoffaufnahme ist jedoch erst nach 180 Minuten beendet. Das anfallende Hydrierprodukt weist <0,01 Gew.-% olefinische Kohlenwasserstoffe und <0,02 Gew.-% aromatische Kohlenwasserstoffe auf.

**Patentansprüche**

1. Katalysator, der in reduzierter Form Mg$^{2+}$ und Ni in einem Molverhältnis von 0,0075 bis 0,075 : 1 und 30,0 bis 40,0 Gramm eines in Wasser unlöslichen Trägers je Mol Ni enthält, wobei die aktive Nickelmetalloberfläche 110 bis 180 m$^2$/g Ni beträgt und 65 bis 97 % der BET-Gesamtoberfläche von Poren mit Radien $r_p \leq$ 2,5, und 60 bis 95 % der BET-Gesamtoberfläche von Poren mit Radien $r_p$ von 1,5 bis 2,5 nm gebildet werden.

2. Katalysator nach Anspruch 1, dadurch gekennzeichnet, daß die BET-Gesamtoberfläche 160 bis 450 m$^2$/g Katalysator beträgt.

3. Katalysator nach Anspruch 1 oder 2, dadurch gekennzeichnet, daß die BET-Gesamtoberfläche 180 bis 380 m$^2$/g Katalysator beträgt.

4. Katalysator nach einem oder mehreren der Ansprüche 1 bis 3, dadurch gekennzeichnet, daß die BET-Gesamtoberfläche 200 bis 350 m$^2$/g Katalysator beträgt.

5. Katalysator nach einem oder mehreren der Ansprüche 1 bis 4, dadurch gekennzeichnet, daß er Mg$^{2+}$ und Ni in einem Molverhältnis von 0,015 bis 0,06 : 1 enthält.

6. Katalysator nach einem oder mehreren der Ansprüche 1 bis 5, dadurch gekennzeichnet, daß er Mg$^{2+}$ und Ni in einem Molverhältnis von 0,022 bis 0,055 : 1 enthält.

7. Katalysator nach einem oder mehreren der Ansprüche 1 bis 6, dadurch gekennzeichnet, daß der Träger Ca-, Mg-, Al-silikat, $Al_2O_3$, $SiO_2$ und/oder Kieselgur ist.

8. Katalysator nach einem oder mehreren der Ansprüche 1 bis 7, dadurch gekennzeichnet, daß die aktive Nickelmetalloberfläche 120 bis 160 $m^2$/g Ni beträgt.

9. Katalysator nach einem oder mehreren der Ansprüche 1 bis 8, dadurch gekennzeichnet, daß die aktive Nickelmetalloberfläche 130 bis 150 $m^2$/g Ni beträgt.

10. Katalysator nach einem oder mehreren der Ansprüche 1 bis 9, dadurch gekennzeichnet, daß 70 bis 95 % der BET-Gesamtoberfläche von Poren mit einem Radius $r_p$ von 1,5 bis 2,5 nm gebildet werden.

11. Katalysator nach einem oder mehreren der Ansprüche 1 bis 10, dadurch gekennzeichnet, daß 73 bis 90 % der BET-Gesamtoberfläche von Poren mit einem Radius $r_p$ von 1,5 bis 2,5 nm gebildet werden.

12. Katalysator nach einem oder mehreren der Ansprüche 1 bis 11, dadurch gekennzeichnet, daß 35 bis 85 % der BET-Gesamtoberfläche von Poren mit einem Radius $r_p$ von 1,8 bis 2,5 nm gebildet werden.

13. Katalysator nach einem oder mehreren der Ansprüche 1 bis 12, dadurch gekennzeichnet, daß 45 bis 76 % der BET-Gesamtoberfläche von Poren mit einem Radius $r_p$ von 1,8 bis 2,5 nm gebildet werden.

14. Katalysator nach einem oder mehreren der Ansprüche 1 bis 13, dadurch gekennzeichnet, daß 50 bis 70 % der BET-Gesamtoberfläche von Poren mit einem Radius $r_p$ von 1,8 bis 2,5 nm gebildet werden.

15. Verfahren zur Herstellung eines Katalysators nach einem oder mehreren der Ansprüche 1 bis 14, gekennzeichnet durch getrennte, aber gleichzeitige Zugabe einer Nickel- und Magnesium-Salze enthaltenden Lösung und einer Lösung eines basischen Fällungsmittels bei konstantem pH-Wert innerhalb eines pH-Bereiches von 6 bis 8,5 bei 90 bis 110 °C zu einem in Wasser suspendierten Träger, wobei ein Copräzipitat, enthaltend Mg und Nickel entsprechend einem Molverhältnis von 0,02 bis 0,25 : 1, gebildet wird, das Molverhältnis Mg zu Nickel durch anschließendes Waschen mit Wasser bei 60 bis 90 °C auf einen Wert von 0,0075 bis 0,075 : 1 eingestellt wird, nachfolgend, gegebenenfalls nach Formgebung, getrocknet und reduziert wird.

## Claims

1. A catalyst containing in reduced form $Mg^{2+}$ and Ni in a molar ratio of 0.0075 to 0.075 : 1 and 30.0 to 40.0 g of a water-insoluble support per mole of Ni, the active nickel metal surface area being 110 to 180 $m^2$/g of Ni, 65 to 97% of the BET total surface area being formed by pores having radii $r_p \leq 2.5$ nm and 60 to 95% of the BET total surface area being formed by pores having radii $r_p$ of 1.5 to 2.5 nm.

2. A catalyst according to claim 1, characterised in that the BET total surface area is 160 to 450 $m^2$/g of catalyst.

3. A catalyst according to claim 1 or 2, characterised in that the BET total surface area is 180 to 380 $m^2$/g of catalyst.

4. A catalyst according to one or more of claims 1 to 3, characterised in that the BET total surface area is 200 to 350 $m^2$/g of catalyst.

5. A catalyst according to one or more of claims 1 to 4, characterised in that it contains $Mg^{2+}$ and Ni in a molar ratio of 0.015 to 0.06 : 1.

6. A catalyst according to one or more of claims 1 to 5, characterised in that it contains $Mg^{2+}$ and Ni in a molar ratio of 0.022 to 0.055 : 1.

7. A catalyst according to one or more of claims 1 to 6, characterised in that the support is calcium silicate, magnesium silicate, aluminium silicate, $Al_2O_3$, $SiO_2$ and/or kieselguhr.

8. A catalyst according to one or more of claims 1 to 7, characterised in that the active nickel metal surface area is 120 to 160 $m^2$/g of nickel.

9. A catalyst according to one or more of claims 1 to 8, characterised in that the active nickel metal surface is 130 to 150 $m^2$/g of nickel.

10. A catalyst according to one or more of claims 1 to 9, characterised in that 70 to 95% of the BET total surface area is formed by pores having a radius $r_p$ of 1.5 to 2.5 nm.

11. A catalyst according to one or more of claims 1 to 10, characterised in that 73 to 90% of the BET total surface area is formed by pores

having a radius $r_p$ of 1.5 to 2.5 nm.

12. A catalyst according to one or more of claims 1 to 11, characterised in that 35 to 85% of the BET total surface area is formed by pores having a radius $r_p$ of 1.8 to 2.5 nm.

13. A catalyst according to one or more of claims 1 to 12, characterised in that 45 to 76% of the BET total surface area is formed by pores having a radius $r_p$ of 1.8 to 2.5 nm.

14. A catalyst according to one or more of claims 1 to 13, characterised in that 50 to 70% of the BET total surface area is formed by pores having a radius $r_p$ of 1.8 to 2.5 nm.

15. A process for preparing a catalyst according to one or more of claims 1 to 14, characterised by the separate but simultaneous addition of a solution containing nickel salts and magnesium salts as well as a solution of a basic precipitant at a constant pH within a range of 6 to 8.5 at 90 to 110 °C to a support suspended in water, whereby a coprecipitate containing magnesium and nickel in a molar ratio of 0.02 to 0.25 : 1 is formed and the molar ratio of magnesium to nickel is set to a value of 0.0075 to 0.75 : 1 by subsequent washing with water at 60 to 90 °C, said coprecipitate being subsequently dried, optionally after shaping, and reduced.

**Revendications**

1. Catalyseur qui contient dans une forme réduite $Mg^{2+}$ et Ni selon un rapport molaire de 0,0075 à 0,075 : 1 et 30,0 à 40,0 g d'un support non soluble dans l'eau par mole de Ni, la surface métallique active de nickel étant de 110 à 180 $m^2$/g de Ni et 65 à 97 % de la surface BET totale étant formés de pores ayant un rayon $r_p$ ≦ 2,5, et 60 à 95 % de la surface BET totale de pores ayant un rayon $r_p$ compris entre 1,5 et 2,5 nm.

2. Catalyseur selon la revendication 1, caractérisé en ce que la surface BET totale est de 160 à 450 $m^2$/g de catalyseur.

3. Catalyseur selon la revendication 1 ou 2, caractérisé en ce que la surface BET totale est de 180 à 380 $m^2$/g de catalyseur.

4. Catalyseur selon l'une quelconque des revendications 1 à 3, caractérisé en ce que la surface BET totale est de 200 à 350 $m^2$/g de catalyseur.

5. Catalyseur selon l'une quelconque des revendications 1 à 4, caractérisé en ce qu'il contient $Mg^{2+}$ et Ni selon un rapport molaire de 0,015 à 0,06 : 1.

6. Catalyseur selon l'une quelconque des revendication 1 à 5, caractérisé en ce qu'il contient $Mg^{2+}$ et Ni selon un rapport molaire de 0,022 à 0,055 : 1.

7. Catalyseur selon l'une quelconque des revendications 1 à 6, caractérisé en ce que le support est un silicate de Ca, de Mg, d'Al, $Al_2O_3$, $SiO_2$ et/ou de la diatomite.

8. Catalyseur selon l'une quelconque des revendications 1 à 7, caractérisé en ce que la surface métallique active de nickel est de 120 à 160 $m^2$/g de Ni.

9. Catalyseur selon l'une quelconque des revendications 1 à 8, caractérisé en ce que la surface métallique active de nickel est de 130 à 150 $m^2$/g de Ni.

10. Catalyseur selon l'une quelconque des revendications 1 à 9, caractérisé en ce que 70 à 95 % de la surface BET totale sont formés de pores ayant un rayon $r_p$ de 1,5 à 2,5 nm.

11. Catalyseur selon l'une quelconque des revendications 1 à 10, caractérisé en ce que 73 à 90 % de la surface BET totale sont formés de pores ayant un rayon $r_p$ de 1,5 à 2,5 nm.

12. Catalyseur selon l'une quelconque des revendications 1 à 11, caractérisé en ce que 35 à 85 % de la surface BET totale sont formés de pores ayant un rayon $r_p$ de 1,8 à 2,5 nm.

13. Catalyseur selon l'une quelconque des revendications 1 à 12, caractérisé en ce que 45 à 76 % de la surface BET totale sont formés de pores ayant un rayon $r_p$ de 1,8 à 2,5 nm.

14. Catalyseur selon l'une quelconque des revendications 1 à 13, caractérisé en ce que 50 à 70 % de la surface BET totale sont formés de pores ayant un rayon $r_p$ de 1,8 à 2,5 nm.

15. Procédé pour la préparation d'un catalyseur selon l'une quelconque des revendications 1 à 14, caractérisé par une addition séparée, mais simultanée, d'une solution contenant des sels de nickel et de magnésium et d'une solution d'un agent basique de précipitation, à une valeur constante de pH à l'intérieur d'un domaine de pH de 6 à 8,5, à une température de 90 à 110°C, à un support en suspension dans de l'eau, un coprécipité, contenant Mg et du nickel selon un rapport molaire de 0,02 à 0,25 : 1 étant formé, le rapport molaire Mg au nickel étant ajusté à une valeur de 0,0075 à 0,075 : 1 par lavage subséquent avec de l'eau à une température de 60 à 90°C, puis dans la suite éventuellement après façonnage, étant séché et réduit.